# EUROPEAN PATENT APPLICATION

(11) **EP 4 549 032 A1**
(43) Date of publication of application: **07.05.2025**
(21) Application number: 23878781.6
(22) Date of filing: 09.08.2023
(51) Int. Cl.: B05C 5/02, B05B 15/50, B05B 15/522, H01M 4/04

(54) **COATING DIE HEAD, COATING DEVICE AND COATING METHOD**

(30) Priority: 18.10.2022 CN 202211274324
(71) Applicant: Contemporary Amperex Technology (Hong Kong) Limited, Hong Kong (HK)
(72) Inventor: ZHAN, Bingyang, Ningde, Fujian 352100 (CN); ZHANG, Jingdong, Ningde, Fujian 352100 (CN); ZHEN, Zhihui, Ningde, Fujian 352100 (CN); YANG, Da, Ningde, Fujian 352100 (CN); WANG, Qiangjun, Ningde, Fujian 352100 (CN); CHEN, Weigang, Ningde, Fujian 352100 (CN); LUO, Biyao, Ningde, Fujian 352100 (CN)
(74) Representative: Gong, Jinping
(86) International application number: PCT/CN2023/112037
(87) International publication number: WO 2024/082785

(57) **Abstract**

A coating die (100), a coating apparatus, and a coating method are provided, and pertain to the field of battery technologies. The coating die (100) includes a die body (10) and a cleaning assembly (20). The die body (10) has a receiving cavity (11), a feed port (12), and a discharge port (13). The cleaning assembly (20) is located in the receiving cavity (11). The cleaning assembly (20) includes a cleaning part (21) and a driving part (22), the driving part (22) being configured to drive the cleaning part (21) to extend into the discharge port (13) for cleaning of the discharge port (13). When the discharge port (13) of the coating die (100) needs to be cleaned, the cleaning part (21) can be driven by the driving part (22) of the cleaning assembly (20) to extend into the discharge port (13). Debris or dried slurry in the discharge port (13) can be discharged by the cleaning part (21) in the process of extending into the discharge port (13), thereby cleaning the discharge port (13).

## Description

### CROSS-REFERENCE TO RELATED APPLICATIONS

This application refers to Chinese Patent Application No. 202211274324.5, filed on October 18, 2022 and entitled "COATING DIE, COATING APPARATUS, AND COATING METHOD", which is incorporated herein by reference in its entirety.

### TECHNICAL FIELD

This application relates to the field of battery technologies, and in particular, to a coating die, a coating apparatus, and a coating method.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

Currently, in the production of battery electrode plates, coating die is generally used to coat electrode plates. The coating die discharges slurry from the discharge port and coats the slurry on an uncoated foil, and when the coating is completed and the coating die stops working, some slurry may remain in the discharge port, and the slurry may block the discharge port when dried. During the next coating, the dried slurry may cause scratches or even breaks on the foil, resulting in a waste of resources.

In the related art, the discharge port is cleaned by manually wiping the discharge port before the coating die is activated, but this method cannot achieve automatic cleaning and has low cleaning efficiency.

### SUMMARY

This application aims to solve at least one of the technical problems in the background. In view of this, an objective of this application is to provide a coating die, a coating apparatus, and a coating method, to alleviate the problem of low cleaning efficiency in the related art.

An embodiment of a first aspect of this application provides a coating die. The coating die includes: a die body having a receiving cavity, a feed port, and a discharge port; and a cleaning assembly located in the receiving cavity, where the cleaning assembly includes a cleaning part and a driving part, the driving part being configured to drive the cleaning part to extend into the discharge port for cleaning of the discharge port.

In the technical solution of this embodiment of this application, when the discharge port of the coating die needs to be cleaned, the cleaning part can be driven by the driving part to extend into the discharge port. Debris or dried slurry in the discharge port can be discharged by the cleaning part in the process of extending into the discharge port, thereby cleaning the discharge port. The cleaning assembly enables automatic mechanical cleaning of the discharge port, which is faster and more efficient compared to manual cleaning in the related art.

In some embodiments, the driving part includes a transmission shaft fixed in the receiving cavity, where the cleaning part is connected to the transmission shaft such that rotation of the transmission shaft is capable of driving the cleaning part to extend into the discharge port. The rotation of the transmission shaft drives the cleaning part to move and clean the discharge port, and the rotation of the transmission shaft is converted into the movement of the cleaning part. The conversion of rotation to movement is a common conversion mode, which can be more easily implemented with a motor, and related installation is relatively simple.

In some embodiments, the cleaning part includes an elastic sheet, where a portion of the elastic sheet is wound around the transmission shaft, and another portion of the elastic sheet is used to extend into the discharge port when the transmission shaft rotates. With the elastic force of the elastic sheet, when the transmission shaft rotates, the wound portion of the elastic sheet is released from the transmission shaft under the action of its own elastic force, thereby enabling the another portion of the elastic sheet to extend from the inside of the receiving cavity into the discharge port, implementing automatic cleaning.

In some embodiments, the elastic sheet includes at least one of a metal elastic sheet and a plastic elastic sheet. Both the metal elastic sheet and the plastic elastic sheet have good elasticity and can improve the elasticity of the elastic sheet, while the metal elastic sheet and the plastic elastic sheet are easily available, reducing the production cost.

In some embodiments, the coating die further includes a cleaning strip. The cleaning strip has multiple non-perforated regions and perforated regions located between adjacent two non-perforated regions, and the multiple non-perforated regions are arranged along a length direction X of the cleaning strip, where the cleaning strip abuts against the discharge port, and the cleaning strip is configured to move along a first direction Y relative to the discharge port so that the non-perforated regions clean debris at the discharge port. After debris or dried slurry is discharged through the cleaning assembly, the discharge port can be wiped by the cleaning strip being controlled to move along the first direction Y for secondary cleaning, which can also take away the debris that is adhered to the surface of the discharge port and difficult to clean, improving the cleaning effect.

In some embodiments, along the length direction X of the cleaning strip, length L1 of the non-perforated regions is greater than or equal to 100 millimeters and less than or equal to 1000 millimeters. The length L1 of the non-perforated regions is greater than or equal to 100 millimeters so that the non-perforated regions have a sufficient length to clean the discharge port. In addition, if the length L1 of the non-perforated regions is too long, the non-perforated regions have already played a very good cleaning effect on the discharge port after moving a certain distance along the first direction Y in a pass, and subsequent non-perforated regions continuing to move along the first direction Y has no significant cleaning effect on the discharge port, causing waste in the subsequent non-perforated regions. Therefore, the length L1 of the non-perforated regions being less than or equal to 1000 millimeters can avoid resource waste to some extent.

In some embodiments, the die body has a lip, the discharge port is located at the lip, and length L2 of the perforated regions along the length direction X of the cleaning strip is greater than height H of the lip along the first direction Y. When the cleaning is completed, the cleaning strip needs to be adjusted to move along the first direction Y so that the lip is opposite the perforated regions of the cleaning strip from which the slurry is discharged. The length L2 of the perforated regions along the length direction X of the cleaning strip is greater than the height H of the lip along the first direction Y, so that there is a certain deviation between the length L2 of the perforated regions and the height H of the lip, and a position at which a perforated region of the cleaning strip stops can be controlled with a certain deviation, which is convenient for control.

In some embodiments, width D1 of the cleaning strip is greater than width D2 of the discharge port along a second direction Z, where the second direction Z is perpendicular to the first direction Y. Since the width D1 of the cleaning strip is greater than the width D2 of the discharge port along the second direction Z, the cleaning strip can completely cover the discharge port in the second direction Z, allowing the non-perforated regions to clean the entire discharge port. Additionally, when the coating die stops, the non-perforated regions of the cleaning strip can close the entire discharge port, reducing the solidification of the slurry.

In some embodiments, the width D1 of the cleaning strip is less than or equal to width D3 of the die body along the second direction Z. The cleaning strip has a lower hardness, while the die body is generally made of metal with higher hardness, and the edges of the die body are relatively sharp. The width D1 of the cleaning strip is less than or equal to the width D3 of the die body along the second direction Z so that the cleaning strip does not extend beyond the edges of the die body, thereby avoiding the cleaning strip coming into contact with and being scratched by the edges of the die body to some extent.

In some embodiments, the coating die further includes a cleaning strip winding assembly. The cleaning strip winding assembly includes: an unwind shaft, where the cleaning strip is wound on the unwind shaft; and a wind shaft, where a free end of the cleaning strip bypasses the discharge port and is wound on the wind shaft. The unwind shaft and the wind shaft are respectively located on two sides of the die body and can be used to fix the cleaning strip. Additionally, the rotation of the unwind shaft and the wind shaft can allow for more convenient control of the movement of the cleaning strip.

In some embodiments, the coating die further includes a waste box in contact with at least one surface of the cleaning strip, the waste box being located between the die body and the wind shaft. Since the non-perforated regions of the cleaning strip clean the discharge port, the cleaning strip will be contaminated with discharged waste. The waste box can collect the waste on the cleaning strip, reducing environmental pollution.

In some embodiments, the receiving cavity has an opening, and the die body includes: a cover plate covering the opening of the receiving cavity. The cover plate has a flow channel structure, and the flow channel structure is configured to connect the opening of the receiving cavity and the discharge port, where one end of the cleaning part is located in the flow channel structure, and another end of the cleaning part passes through the opening and is connected to the driving part. One end of the cleaning part is located in the flow channel structure, and the flow channel structure connects with the discharge port. During cleaning, one end of the cleaning part can move more smoothly to the discharge port, avoiding the situation to some extent in which the entire cleaning part is located at the bottom of the receiving cavity and is difficult to move.

In some embodiments, the die body further includes: an upper die body; and a lower die body opposite the upper die body. The receiving cavity is located in the lower die body, and the opening of the receiving cavity faces the upper die body; where the cover plate is located between the upper die body and the lower die body. The receiving cavity is located in the lower die body, the surface of the upper die body facing the lower die body is flat, the cover plate is located between the upper die body and the lower die body, and one end of the elastic sheet is located in the flow channel structure. In this way, under the action of its own elasticity, the elastic sheet abuts against the surface of the upper die body facing the lower die body, and that surface is flat, not affecting the movement of the elastic sheet.

In some embodiments, the die body further includes a pressure strip located in the receiving cavity, the pressure strip being used to fix the cover plate and the upper die body together. The cover plate is generally thin and made of a relatively soft material. If the cover plate and the upper die body are directly fixed together, the cover plate may not be tightly closed to the receiving cavity between adjacent two connection points of the cover plate and the upper die body, which can easily cause slurry leakage. The cover plate and the upper die body are fixed together using the pressure strip, and the pressure strip causes extrusion to the cover plate, which to some extent avoids gaps between the cover plate and the upper die body, thereby improving the tightness.

In some embodiments, the pressure strip has a pressure strip groove, an opening of the pressure strip groove faces the cover plate, and the driving part is located in the pressure strip groove. The pressure strip groove on the pressure strip provides installation space for the driving part, improving space utilization.

In some embodiments, the driving part includes a transmission shaft, and the cleaning assembly further includes: at least two support blocks located in the pressure strip groove; where the transmission shaft passes through the at least two support blocks and is fixed in the pressure strip groove. Two ends of the transmission shaft are connected to side walls of the pressure strip, and the support blocks are arranged in the pressure strip groove to support the middle part of the transmission shaft, improving the stability of the transmission shaft.

In some embodiments, the cleaning assembly includes at least two cleaning parts, and at least one support block is located between any adjacent two cleaning parts. The non-discharge region of the discharge port is closed, and the cleaning part needs to extend into the discharge port. To ensure smooth cleaning of the discharge port by the cleaning assembly, multiple cleaning parts are arranged, each for cleaning the corresponding discharge region of the discharge port.

In some embodiments, the cover plate has multiple comb teeth, the comb teeth are in one-to-one correspondence with the support blocks in position, and a flow channel structure is formed between adjacent two comb teeth. The comb tooth can separate adjacent two flow channel structures, where the flow channel structures are used to transport slurry and the comb teeth do not transport slurry, allowing the coating regions of the electrode plate to be coated.

An embodiment of a second aspect of this application provides a coating apparatus, where the coating apparatus includes the coating die in the foregoing embodiments. The coating apparatus according to this embodiment of this application can implement automatic cleaning of the discharge port with higher cleaning efficiency.

An embodiment of a third aspect of this application provides a method for coating using the coating apparatus of the foregoing embodiment. The method includes: obtaining, during coating, information about the quality of a film layer formed by coating; and controlling, in response to the information about the quality of the film layer not meeting a preset condition, the driving part of the cleaning assembly to drive the cleaning part to extend into the discharge port for cleaning of the coating apparatus. During coating, the information about the quality of the film layer is used to determine whether the discharge port needs cleaning. The film layer quality not meeting the requirements indicates that the discharge port needs cleaning. In this case, the driving part of the cleaning assembly is controlled to drive the cleaning part to extend into the discharge port for cleaning of the coating apparatus, implementing automatic cleaning with higher cleaning efficiency.

In some embodiments, the method further includes controlling the cleaning strip to move along the first direction so that the non-perforated regions of the cleaning strip clean the coating apparatus. The cleaning strip is controlled to move along the first direction Y so that the non-perforated regions of the cleaning strip takes away debris or dried slurry from the discharge port, thereby further cleaning the coating apparatus and improving the cleaning effect.

In some embodiments, after cleaning the coating apparatus, the method further includes: controlling the cleaning strip to move along the first direction so that a perforated region of the cleaning strip is opposite the discharge port; and controlling the coating apparatus to discharge through the discharge port for coating. When the cleaning of the discharge port is completed, the perforated region of the cleaning strip is placed opposite the discharge port for coating through the discharge port again.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, identical reference signs in a plurality of the accompanying drawings denote identical or similar parts or elements. These accompanying drawings are not necessarily drawn to scale. It should be understood that these accompanying drawings illustrate only some embodiments disclosed according to this application and should not be considered as limiting the scope of this application.

To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.
FIG. 1 is a schematic structural diagram of a coating die according to some embodiments of this application;
FIG. 2 is a schematic structural diagram of a cleaning assembly fitting with a pressure strip according to some embodiments of this application;
FIG. 3 is a partial schematic diagram of a cleaning assembly fitting with a pressure strip according to some embodiments of this application;
FIG. 4 is a schematic diagram of a coating apparatus in an operating process according to some embodiments of this application;
FIG. 5 is a front view of a coating apparatus in an operating process according to some embodiments of this application;
FIG. 6 is a right view of a coating apparatus in an operating process according to some embodiments of this application;
FIG. 7 is a top view of a coating apparatus in an operating process according to some embodiments of this application;
FIG. 8 is a schematic structural diagram of a cleaning strip according to some embodiments of this application;
FIG. 9 is a schematic structural diagram of a cover plate fitting with a pressure strip according to some embodiments of this application;
FIG. 10 is a top view of a cover plate fitting with a pressure strip according to some embodiments of this application;
FIG. 11 is a flowchart of a method for coating according to some embodiments of this application; and
FIG. 12 is a flowchart of a method for coating according to some embodiments of this application.

### Description of reference signs

100. coating die; 200. electrode plate; 201. coating region; 202. uncoated foil region; 300. coating roller; 400. driving roller; 500. camera;
10. die body; 11. receiving cavity; 111. opening; 12. feed port; 13. discharge port; 14. lip; 15. cover plate; 151. flow channel structure; 152. comb tooth; 16. upper die body; 17. lower die body; 18. pressure strip; 181. pressure strip groove;
20. cleaning assembly; 21. cleaning part; 211. elastic sheet; 22. driving part; 221. transmission shaft; 222. motor; 23. support block; 24. encoder;
30. cleaning strip; 31. non-perforated region; 32. perforated region; 321. hole;
40. cleaning strip winding assembly; 41. unwind shaft; 42. wind shaft; and
50. waste box.

### DESCRIPTION OF EMBODIMENTS

The following describes in detail some embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, from a perspective of market development, application of power batteries is being more extensive. Power batteries have been not only used in energy storage power supply systems such as hydroelectric power plants, heat power plants, wind power plants, and solar power plants, but also widely used in many other fields including electric transportation tools such as electric bicycles, electric motorcycles, and electric vehicles, military equipment, and aerospace. With the continuous expansion of application fields of power batteries, market demands for the power batteries are also expanding.

Battery electrode plates are prone to scratches in the production process, leading to resource wastage. Scratches are primarily caused by debris or dried slurry present in the discharge port of the coating die. During coating, the debris or dried slurry comes into contact with the foil, causing scratches on the foil. In the related art, to reduce the generation of scratches, before coating, the discharge port is manually wiped to remove debris or dried slurry before coating. However, this method cannot achieve automatic cleaning and has low cleaning efficiency.

To solve the problem of low manual cleaning efficiency, this application provides a coating die. The coating die includes: a die body and a cleaning assembly. The die body has a receiving cavity, and the receiving cavity has a feed port and a discharge port. The cleaning assembly is located in the receiving cavity, where the cleaning assembly includes a cleaning part and a driving part, the driving part being configured to drive the cleaning part to extend into the discharge port for cleaning of the discharge port. When there are debris or dried slurry in the discharge port, the driving part will drive the cleaning part to extend into the discharge port to implement automatic cleaning of the discharge port. This method is more efficient than manual cleaning.

The coating die, coating apparatus, and coating method disclosed in the embodiments of this application can be used for the production of battery electrode plates, and can also be used for the production of other devices that require coating slurry.

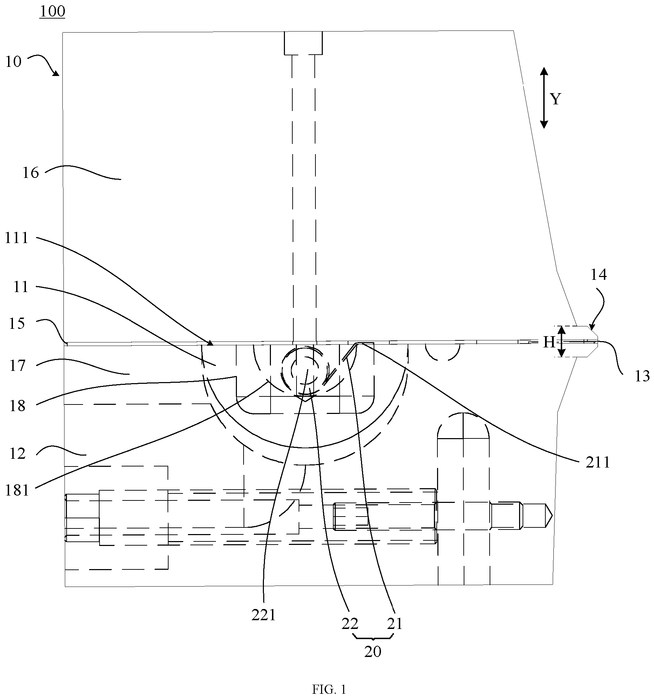

An embodiment of this application provides a coating die. FIG. 1 is a schematic structural diagram of a coating die according to some embodiments of this application. Referring to FIG. 1, the coating die 100 includes a die body 10 and a cleaning assembly 20, the die body 10 having a receiving cavity 11, a feed port 12, and a discharge port 13. The cleaning assembly 20 is located in the receiving cavity 11, and the cleaning assembly 20 includes a cleaning part 21 and a driving part 22, the driving part 22 being configured to drive the cleaning part 21 to extend into the discharge port 13 for cleaning of the discharge port 13.

In the embodiments of this application, the feed port 12 connects with the receiving cavity 11 and is used to transport slurry to the receiving cavity 11. The receiving cavity 11 can be used to receive slurry, and the discharge port 13 connects with the receiving cavity 11 and is used to discharge the slurry in the receiving cavity 11 for coating.

For example, the feed port 12 can be connected to an apparatus containing slurry through a pipeline, and a feed valve is provided on the feed port or the pipeline. When it is necessary to transport slurry to the receiving cavity 11, the feed valve is opened, and slurry is transported to the receiving cavity 11 through the pipeline and the feed port 12. The slurry in the receiving cavity 11 is discharged through the discharge port 13 and evenly coated on the foil that needs to be coated. After the coating is completed, the feed valve is closed, and slurry is no longer transported to the receiving cavity 11.

For example, the feed valve can be a solenoid valve.

The slurry discharged through the discharge port 13 is coated on the foil and adheres to the foil once the slurry solidifies. For example, the slurry may be a positive active slurry, and the positive active slurry is coated on the foil to form a positive electrode plate. Alternatively, the slurry may be a negative active slurry, and the negative active slurry is coated on the foil to form a negative electrode plate.

The coating die provided in the embodiments of this application maybe a slot extrusion coating die.

In the embodiments of this application, when the discharge port 13 of the coating die 100 needs to be cleaned, the driving part 22 of the cleaning assembly 20 can drive the cleaning part 21 to extend into the discharge port 13. Debris or dried slurry in the discharge port 13 is discharged by the cleaning part 21 in the process of extending into the discharge port 13, thereby cleaning the discharge port 13. The cleaning assembly 20 enables automatic mechanical cleaning of the discharge port 13, which is faster and more efficient compared to manual cleaning in the related art.

In addition, in the embodiments of this application, the cleaning assembly 20 is located in the receiving cavity 11. Cleaning the discharge port 13 using the cleaning assembly 20 does not contaminate the slurry compared to cleaning methods in the related art.

In the related art, cleaning is done manually, and when cleaning, the coating die 100 needs to be removed for easy cleaning, resulting in low cleaning efficiency. The coating die 100 provided in the embodiments of this application enables automatic cleaning without the need to remove the coating die 100, resulting in higher cleaning efficiency.

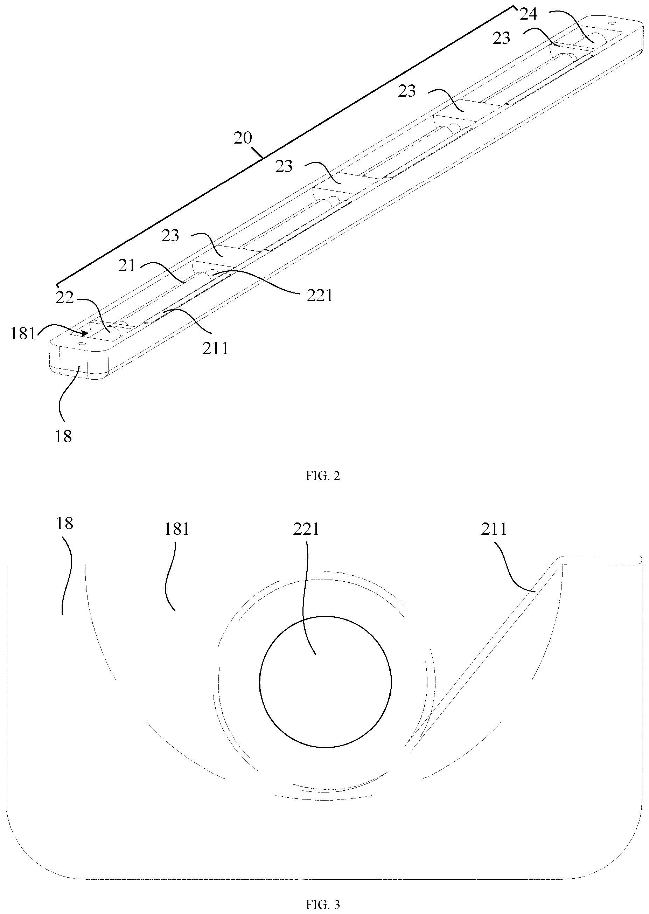

According to some embodiments of this application, FIG. 2 is a schematic structural diagram of a cleaning assembly fitting with a pressure strip according to some embodiments of this application. In combination with FIG. 1 and FIG. 2, the driving part 22 includes a transmission shaft 221, and the transmission shaft 221 is fixed in the receiving cavity 11. The cleaning part 21 is connected to the transmission shaft 221 such that the rotation of the transmission shaft 221 is capable of driving the cleaning part 21 to extend into the discharge port 13.

In the embodiments of this application, the transmission shaft 221 can rotate, and the cleaning part 21 is connected to the transmission shaft 221, so that the rotation of the transmission shaft 221 can be converted into movement of the cleaning part 21, implementing the cleaning of the discharge port 13 by the cleaning part 21 in the course of movement.

In one implementation of the embodiments of this application, the driving part 22 can include a motor 222, the transmission shaft 221 is connected to the motor 222, and the motor 222 operates and drives the transmission shaft 221 to rotate.

For example, one end of the transmission shaft 221 is provided with a motor 222, and the transmission shaft 221 is connected to the motor 222. Another end of the transmission shaft 221 is provided with an encoder 24, and the encoder 24 can feedback an extension length of the cleaning part 21.

Both motors 222 can drive the transmission shaft 221 to rotate, providing greater torque for the transmission shaft 221 and allowing the transmission shaft 221 to rotate more smoothly. In addition, if one motor 222 fails, another motor 222 can also drive the transmission shaft 221 to rotate, ensuring that the cleaning assembly 20 operates smoothly.

In the embodiments of this application, the rotation of the transmission shaft 221 drives the cleaning part 21 to move and clean the discharge port 13, and the rotation of the transmission shaft 221 is converted into the movement of the cleaning part 21. The conversion of rotation to movement is a common conversion mode, which can be more easily implemented with a motor, and related installation is relatively simple.

According to some embodiments of this application, FIG. 3 is a partial schematic diagram of a cleaning assembly fitting with a pressure strip according to some embodiments of this application. In combination with FIGs. 1 to 3, the cleaning part 21 includes an elastic sheet 211. A portion of the elastic sheet 211 is wound around the transmission shaft 221, and another portion of the elastic sheet 211 is used to extend into the discharge port 13 when the transmission shaft 221 rotates.

In some implementations of the embodiments of this application, when the transmission shaft 221 moves clockwise, the elastic sheet 211 is wound onto the transmission shaft 221 so that another portion of the elastic sheet 211 retracts from the discharge port 13 to the inside of the receiving cavity 11. When the transmission shaft 221 moves counterclockwise, the wound portion of the elastic sheet 211 is released from the transmission shaft 221 so that another portion of the elastic sheet 211 extends from the inside of the receiving cavity 11 into the discharge port 13 under its own elastic force of the elastic sheet 211.

In the embodiments of this application, with the elastic force of the elastic sheet 211, when the transmission shaft 221 rotates, the wound portion of the elastic sheet 211 is released from the transmission shaft 221 under the action of its own elastic force, thereby enabling the another portion of the elastic sheet 211 to extend from the inside of the receiving cavity 11 into the discharge port 13, implementing automatic cleaning.

In the related art, manual cleaning can only clean the discharge port 13. In the embodiments of this application, the elastic sheet 211 moves in the receiving cavity 11, which can not only clean the discharge port 13 but also clean the receiving cavity 11.

According to some embodiments of this application, the elastic sheet 211 includes at least one of a metal elastic sheet and a plastic elastic sheet.

In one implementation of this application, the metal elastic sheet may be a stainless steel sheet, an aluminum sheet, or a copper sheet.

In one implementation of this application, the plastic elastic sheet may be a polyethylene sheet, a SPEC plastic sheet, or a polypropylene sheet.

In the embodiments of this application, both the metal elastic sheet and the plastic elastic sheet have good elasticity and can improve the elasticity of the elastic sheet 211. In addition, the metal elastic sheet and the plastic elastic sheets are relatively readily available, reducing production costs.

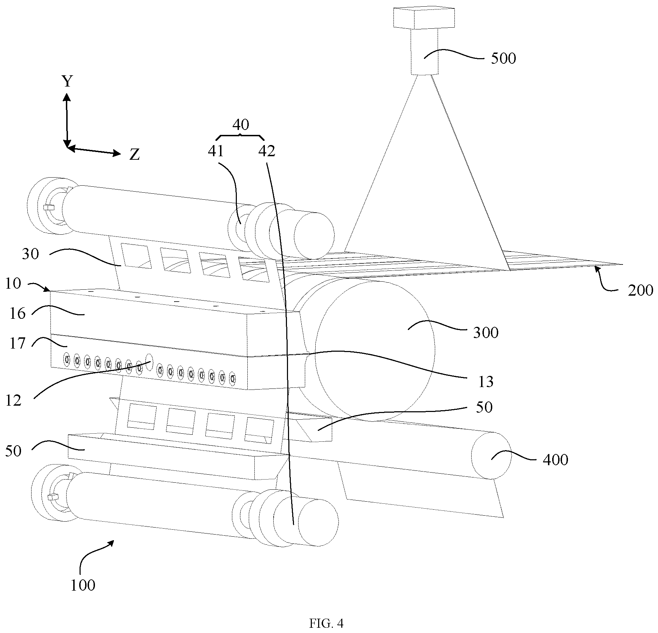

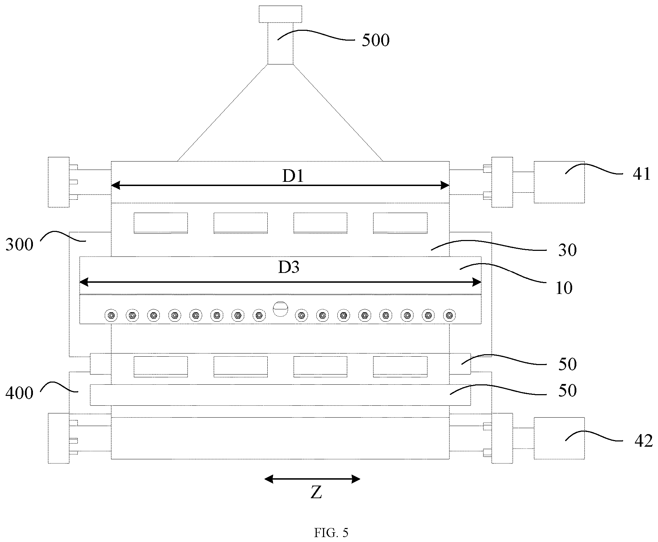

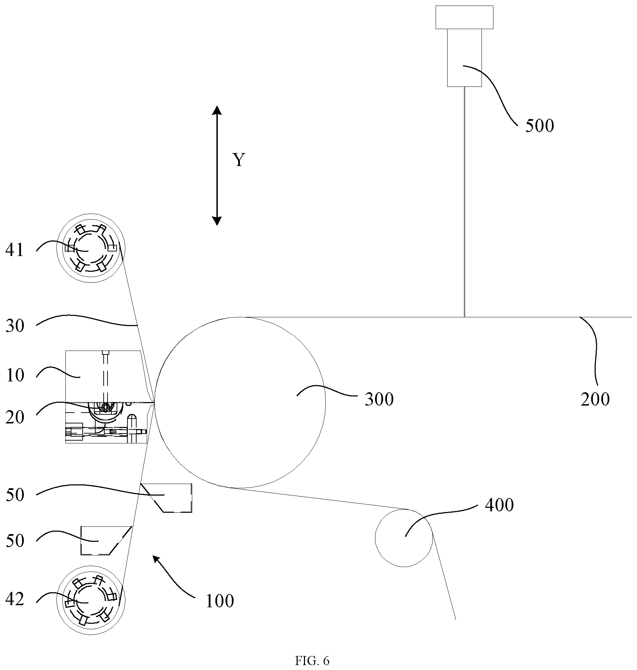

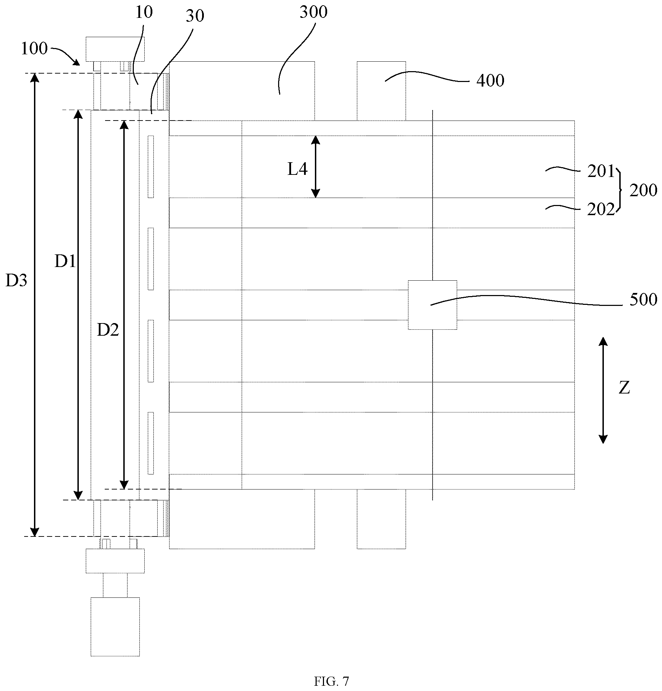

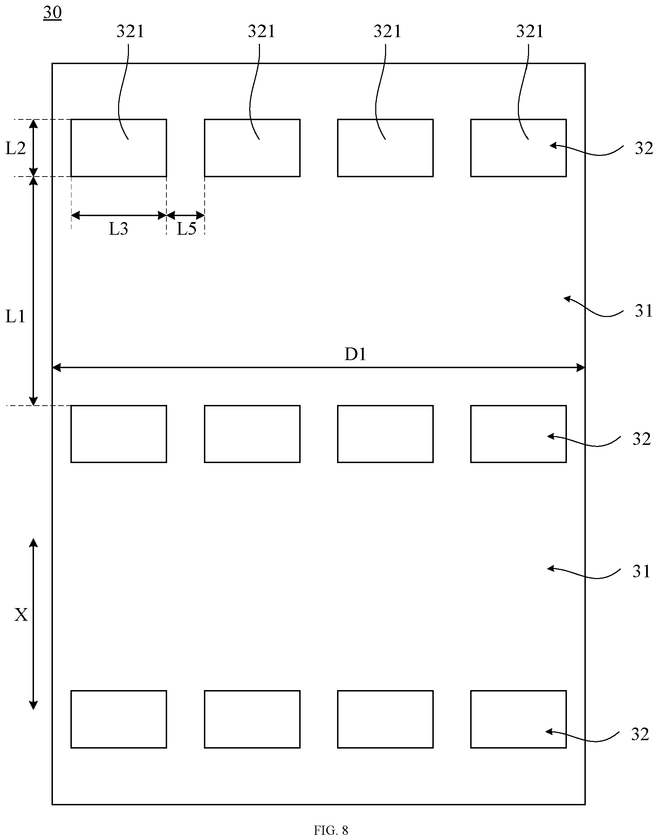

According to some embodiments of this application, FIG. 4 is a schematic diagram of a coating apparatus in an operating process according to some embodiments of this application. FIG. 5 is a front view of a coating apparatus in an operating process according to some embodiments of this application. FIG. 6 is a right view of a coating apparatus in an operating process according to some embodiments of this application. FIG. 7 is a top view of a coating apparatus in an operating process according to some embodiments of this application. Referring to FIGs. 4 to 7, the coating die 100 further includes a cleaning strip 30. FIG. 8 is a schematic structural diagram of a cleaning strip according to some embodiments of this application. Referring to FIG. 8, the cleaning strip 30 has multiple non-perforated regions 31 and perforated regions 32 located between adjacent two non-perforated regions 31, and the multiple non-perforated regions 31 are arranged along the length direction X of the cleaning strip 30. In combination with FIG. 4 and FIG. 5, the cleaning strip 30 abuts against the discharge port 13, and the cleaning strip 30 is configured to move along the first direction Y relative to the discharge port 13 so that the non-perforated regions 31 clean debris at the discharge port 13.

In combination with FIGs. 4 to 7, the coating apparatus further includes an electrode plate 200, a coating roller 300, and a driving roller 400. The driving roller 400 rotates to drive the electrode plate 200 to move towards the coating roller 300. The discharge port 13 of the coating die 100 is opposite the electrode plate 200 on the coating roller 300, and the slurry in the coating die 100 is coated on the electrode plate 200 through the discharge port 13. When the coating apparatus is operating normally, a perforated region 32 of the cleaning strip 30 is opposite the discharge port 13, which to some extent avoids blocking the discharge port 13, allowing the slurry to be discharged through the discharge port 13.

In some embodiments of this application, the cleaning strip 30 may be a film. The film has a small thickness and does not take up much space, resulting in high space utilization. In addition, the cleaning strip 30 is located between the electrode plate 200 and the die body 10, affecting a distance between the electrode plate 200 and the die body 10. If the distance between the electrode plate 200 and the die body 10 is too large, it is not convenient for coating. A relatively small thickness of the film does not cause the distance between the electrode plate 200 and the die body 10 to increase and affect coating.

For example, the cleaning strip 30 may be a polyvinylidene chloride cleaning strip. The cleaning strip 30 is a transparent cleaning strip, making it convenient for staff to observe the coating effect.

In the embodiments of this application, the cleaning strip 30 is located between the coating roller 300 and the die body 10. To allow the slurry in the die body 10 to be coated on the electrode plate 200 on the coating roller 300, the gap between the die body 10 and the coating roller 300 is greater than or equal to 100 micrometers (µm) and less than or equal to 500 micrometers. To enable the cleaning strip 30 to move between the coating roller 300 and the die body 10 and improve the strength of the cleaning strip 30, the thickness of the cleaning strip 30 is greater than or equal to 50 micrometers and less than or equal to 100 micrometers.

In the embodiments of this application, after debris or dried slurry is discharged through the cleaning assembly 20, the discharge port 13 can be wiped by the cleaning strip 30 being controlled to move along the first direction Y for further cleaning, which can also take away the debris that is adhered to the surface of the discharge port 13 and difficult to clean, improving the cleaning effect. It can be understood that the cleaning strip 30 can also perform cleaning operations independently without cooperating with the cleaning assembly 20. For example, before the cleaning assembly 20 is used to clean the discharge port 13, the cleaning strip 30 can be controlled to move along the first direction Y to wipe the discharge port 13, further improving the efficiency of subsequent cleaning by the cleaning assembly 20.

In the embodiments of this application, after the coating is completed, there is still some slurry remaining in the receiving cavity 11 that needs to be coated. The cleaning strip 30 can be controlled to move along the first direction Y so that a non-perforated region 31 of the cleaning strip 30 is opposite and close the discharge port 13, reducing the contact between the slurry and air and thereby reducing the solidification of the slurry.

According to some embodiments of this application, referring to FIG. 8, along the length direction X of the cleaning strip 30, length L1 of the non-perforated regions 31 is greater than or equal to 100 millimeters (mm) and less than or equal to 1000 millimeters.

In the embodiment of this application, the length direction X of the cleaning strip 30 is the arrangement direction of the non-perforated regions 31 and the perforated regions 32.

For example, the length L1 of the non-perforated regions 31 may be 500 millimeters.

In one implementation of the embodiments of this application, during cleaning, the moving speed of the cleaning strip 30 along the first direction Y is greater than or equal to 10 millimeters per second (mm/s) and less than or equal to 100 millimeters per second. This can to some extent ensure the time for the non-perforated regions 31 to wipe the discharge port 13, resulting in a good cleaning effect. To some extent, this also avoids the cleaning strip 30 moving too slowly along the first direction Y and affecting efficiency.

In the embodiments of this application, the length L1 of the non-perforated regions 31 is greater than or equal to 100 millimeters so that the non-perforated regions 31 have a sufficient length to clean the discharge port 13. In addition, if the length L1 of the non-perforated regions 31 is too long, the non-perforated regions 31 have already played a very good cleaning effect on the discharge port 13 after moving a certain distance along the first direction Y in a pass, and subsequent non-perforated regions 31 continuing to move along the first direction Y has no significant cleaning effect on the discharge port 13, causing waste in the subsequent non-perforated regions 31. Therefore, the length L1 of the non-perforated regions 31 being less than or equal to 1000 millimeters can avoid resource waste to a certain extent.

According to some embodiments of this application, referring to FIG. 1, the die body 10 has a lip 14, and the discharge port 13 is located at the lip 14. In combination with FIG. 1 and FIG. 8, length L2 of the perforated regions 32 along the length direction X of the cleaning strip 30 is greater than height H of the lip 14 along the first direction Y.

The lip 14 is a protruding portion of the die body 10 facing the electrode plate 200, facilitating contact between the lip 14 and the electrode plate 200. The discharge port 13 is located at the lip 14, allowing the slurry discharged from the discharge port 13 to flow onto the electrode plate 200.

In the embodiments of this application, when the cleaning is completed, the cleaning strip 30 needs to be adjusted to move along the first direction Y so that the lip 14 is opposite the perforated regions 32 of the cleaning strip 30 from which the slurry is discharged. The length L2 of the perforated regions 32 along the length direction X of the cleaning strip 30 is greater than the height H of the lip 14 along the first direction Y, so that there is a certain deviation between the length L2 of the perforated regions 32 and the height H of the lip 14, and a position at which a perforated region 32 of the cleaning strip 30 stops can be controlled with a certain deviation, which is convenient for control.

The height H of the lip 14 along the first direction Y is greater than or equal to 5 millimeters and less than or equal to 20 millimeters. In the embodiments of this application, the length L2 of the perforated regions 32 along the length direction X of the cleaning strip 30 is greater than or equal to 20 millimeters and less than or equal to 100 millimeters.

According to some embodiments of this application, referring to FIG. 7, width D1 of the cleaning strip 30 is greater than width D2 of the discharge port 13 along a second direction Z, where the second direction Z is perpendicular to the first direction Y.

It should be noted that the discharge port 13 is not shown in FIG. 7. To ensure that the discharge port 13 can completely coat the electrode plate 200 without excess slurry flowing out at the edges and causing waste, generally, the width of the electrode plate 200 along the second direction Z is equal to the width D2 of the discharge port 13 along the second direction Z. Therefore, in FIG. 7, the width of the electrode plate 200 along the second direction Z is used instead of the width D2 of the discharge port 13 along the second direction Z.

In the embodiments of this application, since the width D1 of the cleaning strip 30 is greater than the width D2 of the discharge port 13 along the second direction Z, the cleaning strip 30 can completely cover the discharge port 13 in the second direction Z, allowing the non-perforated regions 31 to clean the entire discharge port 13. Additionally, when the coating die 100 stops, the non-perforated regions 31 of the cleaning strip 30 can close the entire discharge port 13, reducing the solidification of the slurry.

In the embodiments of this application, the difference between the width D1 of the cleaning strip 30 and the width D2 of the discharge port 13 along the second direction Z is greater than or equal to 40 millimeters and less than or equal to 100 millimeters. This enables the width D1 of the cleaning strip 30 to completely cover the discharge port 13. In addition, to some extent, this avoids the width D1 of the cleaning strip 30 being too large and causing waste.

According to some embodiments of this application, referring to FIG. 5 and FIG. 7, the width D1 of the cleaning strip 30 is less than or equal to the width D3 of the die body 10 along the second direction Z.

In the embodiments of this application, when the die body 10 is operating, the width D1 of the cleaning strip 30 is equal to the width of the cleaning strip 30 along the second direction Z.

In the embodiments of this application, the cleaning strip 30 has a lower hardness, while the die body 10 is generally made of metal with higher hardness, and the edges of the die body 10 are relatively sharp. The width D1 of the cleaning strip 30 is less than or equal to the width D3 of the die body 10 along the second direction Z so that the cleaning strip 30 does not extend beyond the edges of the die body 10, thereby avoiding the cleaning strip 30 coming into contact with and being scratched by the edges of the die body 10 to some extent.

For example, the difference between the width D1 of the cleaning strip 30 and the width D3 of the die body 10 along the second direction Z is greater than or equal to 10 millimeters and less than or equal to 100 millimeters. This enables the width D1 of the cleaning strip 30 to be less than width D3 of the die body 10. In addition, to some extent, this also avoids the width D1 of the cleaning strip 30 being too small and resulting in the cleaning strip 30 not completely covering the discharge port 13.

According to some embodiments of this application, referring to FIGs. 4 to 6, the coating die 100 further includes a cleaning strip winding assembly 40. The cleaning strip winding assembly 40 includes an unwind shaft 41 and a wind shaft 42. The cleaning strip 30 is wound on the unwind shaft 41, and a free end of the cleaning strip 30 bypasses the discharge port 13 and is wound on the wind shaft 42.

In the embodiments of this application, the cleaning strip winding assembly 40 may include a servo motor. The servo motor is connected to the wind shaft 42. The servo motor can be used to drive the wind shaft 42 to rotate. Since the cleaning strip 30 is wound on the unwind shaft 41, the free end of the cleaning strip 30 bypasses the discharge port 13 and is wound on the wind shaft 42. The wind shaft 42 in rotating can drive the cleaning strip 30 to move along the first direction Y. The wind shaft 42 may be referred to as the driving side, and the unwind shaft 41 may be referred to as the driven side.

In the embodiments of this application, three-jaw chucks may be used to fix the unwind shaft 41 and the wind shaft 42, respectively.

In one implementation of the embodiments of this application, the diameter of the unwind shaft 41 is greater than or equal to 30 millimeters and less than or equal to 100 millimeters, and the diameter of the wind shaft 42 is greater than or equal to 30 millimeters and less than or equal to 100 millimeters. This enables the diameters of the unwind shaft 41 and the wind shaft 42 to be large enough to facilitate winding the cleaning strip 30. In addition, to some extent, this avoids the diameters of the unwind shaft 41 and the wind shaft 42 being too large and taking up too much space.

In one implementation of the embodiments of this application, the unwind shaft 41 and the wind shaft 42 may be made of a material such as steel, aluminum, or nylon.

In the embodiments of this application, the unwind shaft 41 and the wind shaft 42 are respectively located on two sides of the die body 10 and can be used to fix the cleaning strip 30. Additionally, the rotation of the unwind shaft 41 and the wind shaft 42 can allow for more convenient control of the movement of the cleaning strip 30.

In the embodiments of this application, the cleaning strip winding assembly 40 can use torque or speed control. The diameters of the unwind shaft 41 and the wind shaft 42 are measured by sensors, and the torque or speed difference between the unwind shaft 41 and the wind shaft 42 is controlled according to the diameters, providing a certain tension to the cleaning strip 30. This enables the cleaning strip 30 to adhere closely to the lip 14. The non-perforated regions 31, when stationary under the action of tension, close the lip 14 to prevent slurry from flowing out, and when moving, wipe the surface of the lip 14 to take away excess slurry and particles. Under the action of tension, the perforated regions 32 prevent slurry from leaking through the slit of the lip 14 during coating to contaminate the electrode plate 200.

For example, the tension is greater than or equal to 5 Newtons (N) and less than or equal to 50 Newtons, and the elastic deformation of the cleaning strip 30 is less than 0.5%, reducing the possibility of damage to the cleaning strip 30.

In the embodiments of this application, the cleaning strip winding assembly 40 rotates a fixed number of turns each time to control the stopping positions of the non-perforated regions 31 and the perforated regions 32 of the cleaning strip 30.

According to some embodiments of this application, referring to FIGs. 4 to 6, the coating die 100 further includes waste boxes 50. The waste boxes 50 are in contact with at least one surface of the cleaning strip 30, and the waste boxes 50 are located between the die body 10 and the wind shaft 42.

In the embodiments of this application, along the second direction Z, the width of a waste box 50 is greater than or equal to the width D1 of the cleaning strip 30 so that the waste box 50 can collect all the waste on the cleaning strip 30 and reduce environmental pollution.

In the embodiments of this application, since the non-perforated regions 31 of the cleaning strip 30 clean the discharge port 13, the cleaning strip 30 will inevitably be contaminated with discharged waste. The waste boxes 50 can collect the waste on the cleaning strip 30, reducing environmental pollution.

In the embodiments of this application, the coating die 100 includes two waste boxes 50. The two waste boxes 50 are respectively in contact with two surfaces of the cleaning strip 30 and are arranged to collect, before the winding of the cleaning strip 30, slurry adhered to the cleaning strip 30 or discharged slurry and test coating slurry from the lip 14.

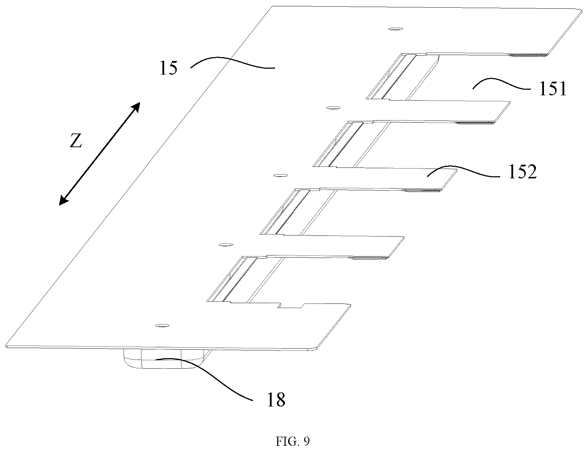

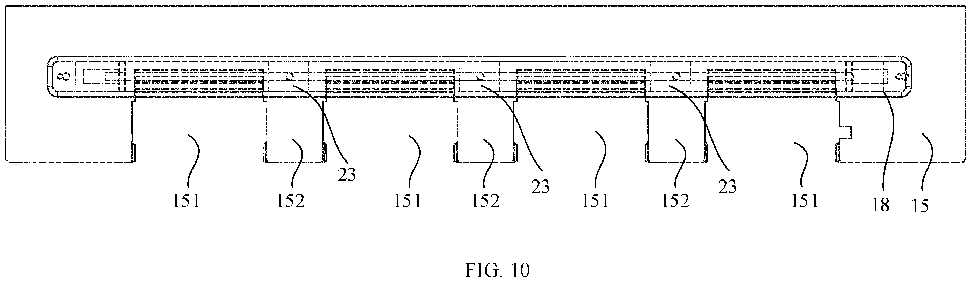

According to some embodiments of this application, referring to FIG. 1, the receiving cavity 11 has an opening 111, and the die body 10 includes a cover plate 15. The cover plate 15 covers the opening 111 of the receiving cavity 11. FIG. 9 is a schematic structural diagram of a cover plate fitting with a pressure strip according to some embodiments of this application. FIG. 10 is a top view of a cover plate fitting with a pressure strip according to some embodiments of this application. In combination with FIG. 1, FIG. 9, and FIG. 10, the cover plate 15 has a flow channel structure 151. The flow channel structure 151 is configured to connect the opening 111 of the receiving cavity 11 and the discharge port 13. One end of the cleaning part 21 is located in the flow channel structure 151, and another end of the cleaning part 21 passes through the opening 111 and is connected to the driving part 22.

In the embodiments of this application, the flow channel structure 151 connects with the receiving cavity 11, and slurry may also be stored in the flow channel structure 151, so the cleaning part 21 may also clean the flow channel structure 151.

In the embodiments of this application, the thickness of the cover plate 15 is greater than or equal to 0.6 millimeters and less than or equal to 1.5 millimeters. The cover plate 15 can be referred to as a gasket.

In the embodiments of this application, one end of the cleaning part 21 is located in the flow channel structure 151, and the flow channel structure 151 connects with the discharge port 13. During cleaning, one end of the cleaning part 21 can move more smoothly to the discharge port 13, avoiding the situation to some extent in which the entire cleaning part 21 is located at the bottom of the receiving cavity 11 and is difficult to move.

According to some embodiments of this application, in combination with FIG. 1 and FIG. 4, the die body 10 further includes an upper die body 16 and a lower die body 17. The lower die body 17 is opposite the upper die body 16, where the receiving cavity 11 is located in the lower die body 17, and the opening 111 of the receiving cavity 11 faces the upper die body 16. The cover plate 15 is located between the upper die body 16 and the lower die body 17.

In the embodiments of this application, the lower die body 17 is opposite the upper die body 16, covering the opening 111 of the receiving cavity 11, which to some extent prevents slurry from flowing out.

In the embodiments of this application, the cover plate 15 is located between the lower die body 17 and the upper die body 16, and the thickness of the gap between the lower die body 17 and the upper die body 16 is the thickness of the cover plate 15. The elastic sheet 211 moves between the lower die body 17 and the upper die body 16. To ensure normal movement of the elastic sheet 211, the thickness of the elastic sheet 211 is less than the thickness of the cover plate 15.

For example, the thickness of the elastic sheet 211 is greater than or equal to 0.4 millimeters and less than or equal to 0.8 millimeters, enabling the elastic sheet 211 to move between the lower die body 17 and the upper die body 16, and, to some extent, avoiding the thickness of the elastic sheet 211 being too thin and affecting the elasticity of the elastic sheet.

In the embodiments of this application, the elastic sheet 211 moves in the flow channel structure 151. To ensure smooth movement of the elastic sheet 211, along the third direction Z, the width of the elastic sheet 211 is less than the width of the flow channel structure 151.

For example, the difference between the width of the elastic sheet 211 and the width of the flow channel structure 151 is greater than or equal to 0.5 millimeters and less than or equal to 1 millimeter, enabling smooth movement of the elastic sheet 211, and, to some extent, avoiding the width of the elastic sheet 211 being too small and affecting the cleaning effect.

In the embodiments of this application, the receiving cavity 11 is located in the lower die body 17, the surface of the upper die body 16 facing the lower die body 17 is flat, the cover plate 15 is located between the upper die body 16 and the lower die body 17, and one end of the elastic sheet 211 is located in the flow channel structure 151. In this way, under the action of its own elasticity, the elastic sheet 211 abuts against the surface of the upper die body 16 facing the lower die body 17, and that surface is flat, not affecting the movement of the elastic sheet 211.

According to some embodiments of this application, referring to FIG. 1, the die body 10 further includes a pressure strip 18. The pressure strip 18 is located in the receiving cavity 11. In combination with FIG. 1, FIG. 9, and FIG. 10, the pressure strip 18 is used to fix the cover plate 15 and the upper die body 16 together.

In the embodiments of this application, the pressure strip 18 is elongated, and the pressure strip 18 extends along the second direction Z.

In the embodiments of this application, the cover plate 15 is generally thin and made of a relatively soft material. If the cover plate 15 and the upper die body 16 are directly fixed together, the cover plate 15 may not be tightly closed to the receiving cavity 11 between adjacent two connection points of the cover plate 15 and the upper die body 16, which can easily cause slurry leakage. The cover plate 15 and the upper die body 16 are fixed together using the pressure strip 18, and the pressure strip 18 causes extrusion to the cover plate 15, which to some extent avoids gaps between the cover plate 15 and the upper die body 16, thereby improving the tightness.

According to some embodiments of this application, referring to FIG. 2, the pressure strip 18 has a pressure strip groove 181. The opening of the pressure strip groove 181 faces the cover plate 15, and the driving part 22 is located in the pressure strip groove 181.

In the embodiments of this application, the pressure strip groove 181 is an elongated groove, and the pressure strip groove 181 extends along the second direction Y.

Referring to FIG. 2, a portion of the elastic sheet 211 is located on the upper surface of the pressure strip 18, that is, not located in the pressure strip groove 181, avoiding the elastic sheet 211 from being stuck in the pressure strip groove 181 to some extent.

A sealing strip is provided between an outlet for the elastic sheet 211 and a contact surface between the upper die body 16 and the lower die body 17, which can reduce the possibility of slurry leakage.

In the embodiments of this application, the pressure strip groove 181 on the pressure strip 18 provides installation space for the driving part 22, improving space utilization.

According to some embodiments of this application, referring to FIG. 2, the driving part 22 includes a transmission shaft 221, and the cleaning assembly 20 further includes at least two support blocks 23. The at least two support blocks 23 are located in the pressure strip groove 181. The transmission shaft 221 passes through multiple support blocks 23 and is fixed in the pressure strip groove 181.

In the embodiments of this application, the transmission shaft 221 is pivotally connected to the support blocks 23 so that the transmission shaft 221 can rotate.

In the embodiments of this application, the shape of the bottom of the support block 23 matches the shape of the bottom of the pressure strip groove 181.

For example, the cross-section of the pressure strip groove 181 is semicircular, and the cross-section of the support block 23 is also semicircular.

In the embodiments of this application, two ends of the transmission shaft 221 are connected to side walls of the pressure strip 18, and support blocks 23 arranged in the pressure strip groove 181 provide support for the middle portion of the transmission shaft 221, improving the stability of the transmission shaft 221.

According to some embodiments of this application, the cleaning assembly 20 includes at least two cleaning parts 21, and at least one support block 23 is located between any adjacent two cleaning parts 21.

Referring to FIG. 7, the electrode plate 200 includes multiple coating regions 201 and multiple uncoated foil regions 202. Adjacent two coating regions 201 are separated by an uncoated foil region 202, where the coating regions 201 are regions that need to be coated with slurry, and the uncoated foil regions 202 are regions that do not need to be coated with slurry, such as a tab region. Therefore, the discharge port 13 of the coating die 100 is also divided into discharge regions and non-discharge regions. The discharge regions correspond to the coating regions 201, and the non-discharge regions correspond to the uncoated foil regions 202. The non-discharge regions of the discharge port 13 do not need to discharge, so the non-discharge regions of the discharge port 13 are closed, reducing the possibility of leakage.

Referring to FIG. 8, the perforated regions 32 of the cleaning strip 30 are provided with multiple holes 321. During use, the multiple holes 321 are respectively opposite the discharge regions of the discharge port 13, allowing smooth discharge. In addition, the cleaning strip 30 between adjacent two holes 321 can cover an uncoated foil region 202, reducing the possibility of slurry contaminating the uncoated foil region 202.

In the embodiment of this application, along the third direction Z, width L3 of the holes 321 is greater than width L4 of the coating regions 201, and similarly, a position at which a hole 321 of the cleaning strip 30 stops can be controlled with a certain deviation, which is convenient for control.

In one implementation of the embodiments of this application, the difference between the width L3 of the holes 321 and the width L4 of the coating regions 201 is greater than or equal to 1 millimeter and less than or equal to 5 millimeters, which can have a certain deviation, and to some extent, also avoid that the width L3 of the holes 321 is too large to contaminate the uncoated foil regions 202 during coating.

In the embodiments of this application, interval L5 between adjacent two holes 321 can be adjusted according to the width of the uncoated foil regions 202. The number of holes 321 can be adjusted according to the number of coating regions 201.

In the embodiments of this application, the non-discharge region of the discharge port 13 is closed, and the cleaning part 21 needs to extend into the discharge port 13. To ensure smooth cleaning of the discharge port 13 by the cleaning assembly 20, multiple cleaning parts 21 are arranged, each for cleaning a corresponding discharge region of the discharge port 13.

According to some embodiments of this application, referring to FIG. 9 and FIG. 10, the cover plate 15 has multiple comb teeth 152, the comb teeth 152 are in one-to-one correspondence with the support blocks 23 in position, and a flow channel structure 151 is formed between adjacent two comb teeth 152.

In the embodiments of this application, the positions of the comb teeth 152, the positions of the support blocks 23, and the positions of the uncoated foil regions 202 correspond to each other.

In the embodiments of this application, the comb teeth 152 divide the receiving cavity 11 into multiple slurry channels, where a comb tooth 152 separate adjacent two slurry channels and the slurry channels are used to transport slurry. The positions of the slurry channels, the flow channel structures 151, the discharge regions of the discharge port 13, and the coating regions 201 correspond to each other. The position of the cleaning assembly 20 corresponds to the positions of the slurry channels, and the cleaning assembly 20 cleans the corresponding slurry channels.

In the embodiments of this application, the comb tooth 152 can separate adjacent two flow channel structures 151, where the flow channel structures 151 are used to transport slurry, and the comb teeth 152 do not transport slurry, allowing the coating regions 201 of the electrode plate 200 to be coated.

In the embodiments of this application, the cleaning assembly 20 and the cleaning strip winding assembly 40 can exchange signals with a coating machine PLC to implement linkage, so that when the coating machine starts coating, cleaning of the coating die 100 can be automatically controlled.

An embodiment of this application provides a coating apparatus, where the coating apparatus includes the coating die in the foregoing embodiments.

The coating apparatus provided in this embodiment of this application can be used for the production of battery electrode plates.

The coating apparatus provided in this embodiment of this application can achieve automatic cleaning of the discharge port 13, with higher cleaning efficiency.

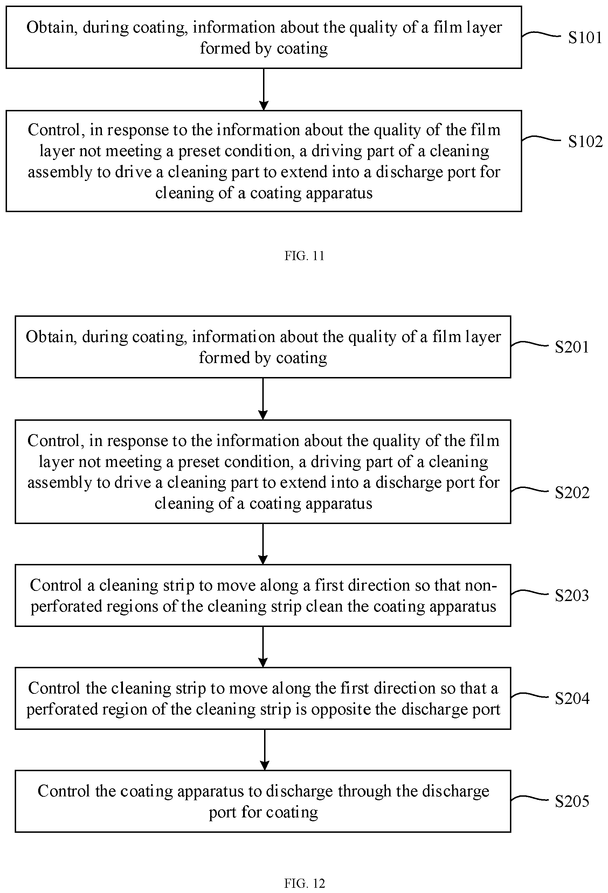

An embodiment of this application provides a method for coating using the foregoing coating apparatus. FIG. 11 is a flowchart of a method for coating according to some embodiments of this application. Referring to FIG. 11, the method includes the following steps.

Step S101. Obtain, during coating, information about the quality of a film layer formed by coating.

Step S102. Control, in response to the information about the quality of the film layer not meeting a preset condition, a driving part of a cleaning assembly to drive a cleaning part to extend into a discharge port for cleaning of a coating apparatus.

Referring to FIG. 4, in an embodiment of this application, during transportation of an electrode plate 200 coated, a camera 500 collects images of the electrode plate 200 coated, and information about the quality of the film layer can be derived from analyzing the images of the electrode plate 200. When the information about the quality of the film layer does not meet the preset condition, it is necessary to clean the discharge port to improve the coating quality.

For example, the camera 500 may be a charge-coupled device (Charge Coupled Device, CCD) camera.

In this embodiment of this application, a detection range of the camera 500 covers the entire width of the electrode plate 200, improving the quality of detection.

For example, the information about the quality of the film layer not meeting the preset condition may include coating defects such as dark marks, scratches, ridges, scratched strips, and short bands.

In this embodiment of this application, during coating, the information about the quality of the film layer is used to determine whether the discharge port needs cleaning. The film layer quality not meeting the requirements indicates that the discharge port needs cleaning. In this case, the driving part of the cleaning assembly is controlled to drive the cleaning part to extend into the discharge port for cleaning of the coating apparatus, implementing automatic cleaning with higher cleaning efficiency.

For example, when the information about the quality of the film layer meets the preset condition, cleaning is not performed.

According to some embodiments of this application, FIG. 12 is a flowchart of a method for coating according to some embodiments of this application. Referring to FIG. 12, the method includes the following steps.

Step S201. Obtain, during coating, information about the quality of a film layer formed by coating.

Step S202. Control, in response to the information about the quality of the film layer not meeting a preset condition, a driving part of a cleaning assembly to drive a cleaning part to extend into a discharge port for cleaning of a coating apparatus.

Step S203. Control a cleaning strip to move along a first direction so that non-perforated regions of the cleaning strip clean the coating apparatus.

In the embodiments of this application, Step S201 is the same as the foregoing Step S101, and Step S202 is the same as the foregoing Step S102. Details are not repeated herein.

In the embodiments of this application, the cleaning strip 30 is controlled to move along the first direction Y so that the non-perforated regions 31 of the cleaning strip 30 takes away debris or dried slurry from the discharge port 13, thereby further cleaning the coating apparatus and improving the cleaning effect.

According to some embodiments of this application, referring to FIG. 12, the method further includes the following steps.

Step S204. Control the cleaning strip to move along the first direction so that a perforated region of the cleaning strip is opposite the discharge port.

Step S205. Control the coating apparatus to discharge through the discharge port for coating.

When the cleaning of the discharge port 13 is completed, the perforated region 32 of the cleaning strip 30 is placed opposite the discharge port 13 for coating again through the discharge port 13.

In the embodiments of this application, after the coating apparatus stops, the cleaning strip 30 can be controlled to move along the first direction Y so that a non-perforated region 31 of the cleaning strip 30 is opposite and close the discharge port 13, reducing the contact between the slurry and air and thereby reducing the solidification of the slurry in the receiving cavity 11.

In the embodiments of this application, when the coating apparatus is stopped for a period of time and is used for coating again, the discharge port 13 can be cleaned first by the cleaning assembly 20 and coating is performed after the cleaning is completed, which can reduce the possibility of dried slurry at the discharge port 13 affecting the coating quality if the coating apparatus has not been used for a long time.

An embodiment of this application provides a coating die. The coating die 100 includes a die body 10, a cleaning assembly 20, a cleaning strip 30, a cleaning strip winding assembly 40, and a waste box 50.

The die body 10 has a receiving cavity 11, a feed port 12, and a discharge port 13. The cleaning assembly 20 is located in the receiving cavity 11, and the cleaning assembly 20 includes a cleaning part 21 and a driving part 22. The cleaning part 21 includes an elastic sheet 211. A portion of the elastic sheet 211 is wound around the transmission shaft 221, and another portion of the elastic sheet 211 is used to extend into the discharge port 13 when the transmission shaft 221 rotates. The driving part 22 includes a transmission shaft 221, and the transmission shaft 221 is fixed in the receiving cavity 11. The cleaning part 21 is connected to the transmission shaft 221 such that the rotation of the transmission shaft 221 is capable of driving the cleaning part 21 to extend into the discharge port 13.

The cleaning strip 30 has multiple non-perforated regions 31 and perforated regions 32 located between adjacent two non-perforated regions 31, and the multiple non-perforated regions 31 are arranged along the length direction X of the cleaning strip 30. The cleaning strip 30 abuts against the discharge port 13, and the cleaning strip 30 is configured to move along the first direction Y relative to the discharge port 13 so that the non-perforated regions 31 clean debris at the discharge port 13. Length L2 of the perforated regions 32 along the length direction X of the cleaning strip 30 is greater than height H of the lip 14 along the first direction Y. Width D1 of the cleaning strip 30 is greater than width D2 of the discharge port 13 along a second direction Z, where the second direction Z is perpendicular to the first direction Y. The width D1 of the cleaning strip 30 is less than or equal to the width D3 of the die body 10 along the second direction Z.

The cleaning strip winding assembly 40 includes an unwind shaft 41 and a wind shaft 42. The cleaning strip 30 is wound on the unwind shaft 41, and the free end of the cleaning strip 30 bypasses the discharge port 13 and is wound on the wind shaft 42.

The waste boxes 50 are in contact with at least one surface of the cleaning strip 30, and the waste boxes 50 are located between the die body 10 and the wind shaft 42.

The die body 10 includes a cover plate 15, an upper die body 16, a lower die body 17, and a pressure strip 18. The cover plate 15 covers the opening 111 of the receiving cavity 11. The cover plate 15 has a flow channel structure 151. The flow channel structure 151 is configured to connect the opening 111 of the receiving cavity 11 and the discharge port 13. One end of the cleaning part 21 is located in the flow channel structure 151, and another end of the cleaning part 21 passes through the opening 111 and is connected to the driving part 22. The lower die body 17 is opposite the upper die body 16, where the receiving cavity 11 is located in the lower die body 17, and the opening 111 of the receiving cavity 11 faces the upper die body 16. The cover plate 15 is located between the upper die body 16 and the lower die body 17. The pressure strip 18 is located in the receiving cavity 11. The pressure strip 18 is used to fix the cover plate 15 and the upper die body 16 together. The pressure strip 18 has a pressure strip groove 181. The opening of the pressure strip groove 181 faces the cover plate 15, and the driving part 22 is located in the pressure strip groove 181.

The cleaning assembly 20 further includes at least two support blocks 23. The at least two support blocks 23 are located in the pressure strip groove 181. The transmission shaft 221 passes through multiple support blocks 23 and is fixed in the pressure strip groove 181. The cleaning assembly 20 includes at least two cleaning parts 21, and at least one support block 23 is located between any two adjacent cleaning parts 21.

The cover plate 15 has multiple comb teeth 152, the comb teeth 152 are in one-to-one correspondence with the support blocks 23 in position, and a flow channel structure 151 is formed between adjacent two comb teeth 152.

In this embodiment of this application, at the start of coating, before the feed valve opens, the cleaning assembly 20 is activated. The elastic sheet 211 extends, and the cleaning strip 30 rotates, achieving the purpose of cleaning the lip 14 and particles. Then, the perforated regions 32 of the cleaning strip 30 are positioned opposite the lip 14, and normal coating begins. During the normal coating, the camera 500 detects coating defects such as dark marks, scratches, and ridges in the coating regions 201, and provides feedback to the coating apparatus. The feed valve is closed, the elastic sheet 211 extends, and the cleaning strip 30 rotates. The non-perforated regions 31 clean the lip 14. The elastic sheet 211 is retracted to its original position, and the cleaning strip 30 is switched from a non-perforated region 31 to a perforated region 32 opposite the lip 14. Then, the slurry feed valve is opened, and normal coating begins. At the end of the coating process, the feed valve is closed, the cleaning assembly 20 is activated, and the cleaning strip 30 rotates one grid, switching from a perforated region 32 to a non-perforated region 31 to cover the lip 14, achieving the purpose of cleaning and closing the lip 14. Then, the coating die 100 is retracted, and the coating process is completed.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of claims and summary in this application. In particular, as long as there is no structural conflict, the various technical features mentioned in the embodiments can be combined in any manners. This application is not limited to the specific embodiments disclosed in this specification, but includes all technical solutions falling within the scope of the claims.

## Claims

1. A coating die, wherein the coating die (100) comprises:
a die body (10) having a receiving cavity (11), a feed port (12), and a discharge port (13), and
a cleaning assembly (20) located in the receiving cavity (11), wherein the cleaning assembly (20) comprises a cleaning part (21) and a driving part (22), the driving part (22) being configured to drive the cleaning part (21) to extend into the discharge port (13) for cleaning of the discharge port (13).

2. The coating die according to claim 1, wherein the driving part (22) comprises:
a transmission shaft (221) fixed in the receiving cavity (11);
wherein the cleaning part (21) is connected to the transmission shaft (221) such that rotation of the transmission shaft (221) is capable of driving the cleaning part (21) to extend into the discharge port (13).

3. The coating die according to claim 2, wherein the cleaning part (21) comprises:
an elastic sheet (211), wherein a portion of the elastic sheet (211) is wound around the transmission shaft (221), and another portion of the elastic sheet (211) is used to extend into the discharge port (13) when the transmission shaft (221) rotates.

4. The coating die according to claim 3, wherein the elastic sheet (211) comprises at least one of a metal elastic sheet and a plastic elastic sheet.

5. The coating die according to any one of claims 1 to 4, wherein the coating die (100) further comprises:
a cleaning strip (30), wherein the cleaning strip (30) has multiple non-perforated regions (31) and perforated regions (32) located between adjacent two non-perforated regions (31), and the multiple non-perforated regions (31) are arranged along a length direction X of the cleaning strip (30),
wherein the cleaning strip (30) abuts against the discharge port (13), and the cleaning strip (30) is configured to move along a first direction Y relative to the discharge port (13) so that the non-perforated regions (31) clean debris at the discharge port (13).

6. The coating die according to claim 5, wherein along the length direction X of the cleaning strip (30), length L1 of the non-perforated regions (31) is greater than or equal to 100 mm and less than or equal to 1000 mm.

7. The coating die according to claim 5 or 6, wherein the die body (10) has a lip (14), the discharge port (13) is located at the lip (14), and length L2 of the perforated regions (32) along the length direction X of the cleaning strip (30) is greater than height H of the lip (14) along the first direction Y.

8. The coating die according to any one of claims 5 to 7, wherein width D1 of the cleaning strip (30) is greater than width D2 of the discharge port (13) along a second direction Z, wherein the second direction Z is perpendicular to the first direction Y.

9. The coating die according to claim 8, wherein the width D1 of the cleaning strip (30) is less than or equal to width D3 of the die body (10) along the second direction Z.

10. The coating die according to any one of claims 6 to 9, wherein the coating die (100) further comprises a cleaning strip winding assembly (40), the cleaning strip winding assembly (40) comprising:
an unwind shaft (41), wherein the cleaning strip (30) is wound on the unwind shaft (41); and
a wind shaft (42), wherein a free end of the cleaning strip (30) bypasses the discharge port (13) and is wound on the wind shaft (42).

11. The coating die according to claim 10, wherein the coating die (100) further comprises:
a waste box (50) in contact with at least one surface of the cleaning strip (30), the waste box (50) being located between the die body (10) and the wind shaft (42).

12. The coating die according to any one of claims 1 to 11, wherein the receiving cavity (11) has an opening (111), and the die body (10) comprises:
a cover plate (15) covering the opening (111) of the receiving cavity (11), wherein the cover plate (15) has a flow channel structure (151), and the flow channel structure (151) is configured to connect the opening (111) of the receiving cavity (11) and the discharge port (13), wherein one end of the cleaning part (21) is located in the flow channel structure (151), and another end of the cleaning part (21) passes through the opening (111) and is connected to the driving part (22).

13. The coating die according to claim 12, wherein the die body (10) further comprises:
an upper die body (16); and
a lower die body (17) opposite the upper die body (16), wherein the receiving cavity (11) is located in the lower die body (17), and the opening (111) of the receiving cavity (11) faces the upper die body (16);
wherein the cover plate (15) is located between the upper die body (16) and the lower die body (17).

14. The coating die according to claim 13, wherein the die body (10) further comprises:
a pressure strip (18) located in the receiving cavity (11), the pressure strip (18) being used to fix the cover plate (15) and the upper die body (16) together.

15. The coating die according to claim 14, wherein the pressure strip (18) has a pressure strip groove (181), an opening of the pressure strip groove (181) faces the cover plate (15), and the driving part (22) is located in the pressure strip groove (181).

16. The coating die according to claim 15, wherein the driving part (22) comprises the transmission shaft (221), and the cleaning assembly (20) further comprises:
at least two support blocks (23) located in the pressure strip groove (181);
wherein the transmission shaft (221) passes through the at least two support blocks (23) and is fixed in the pressure strip groove (181).

17. The coating die according to claim 16, wherein the cleaning assembly (20) comprises at least two cleaning parts (21), and at least one support block (23) is located between any adjacent two cleaning parts (21).

18. The coating die according to claim 17, wherein the cover plate (15) has multiple comb teeth (152), the comb teeth (152) are in one-to-one correspondence with the support blocks (23) in position, and the flow channel structure (151) is formed between adjacent two comb teeth (152).

19. A coating apparatus, wherein the coating apparatus comprises the coating die (100) according to any one of claims 1 to 18.

20. A method for coating using the coating apparatus according to claim 19, wherein the method comprises:
obtaining, during coating, information about the quality of a film layer formed by coating; and
controlling, in response to the information about the quality of the film layer not meeting a preset condition, the driving part of the cleaning assembly to drive the cleaning part to extend into the discharge port for cleaning of the coating apparatus.

21. The method according to claim 20, wherein the method further comprises:
controlling a cleaning strip to move along the first direction so that the non-perforated regions of the cleaning strip clean the coating apparatus.

22. The method according to claim 21, wherein after cleaning the coating apparatus, the method further comprises:
controlling the cleaning strip to move along the first direction so that a perforated region of the cleaning strip is opposite the discharge port; and
controlling the coating apparatus to discharge through the discharge port for coating.
